Europäisches Patentamt

European Patent Office

Office européen des brevets

(11) Veröffentlichungsnummer : **0 041 940**
**B1**

(12) **EUROPÄISCHE PATENTSCHRIFT**

(45) Veröffentlichungstag der Patentschrift :
07.08.85

(51) Int. Cl.⁴ : **C 21 B 13/00**

(21) Anmeldenummer : 81890086.2

(22) Anmeldetag : 21.05.81

(54) **Verfahren zum Behandeln von metallischen Hütteneinsatzstoffen, insbesondere Eisenschwammteilchen.**

(30) Priorität : 11.06.80 AT 3080/80

(43) Veröffentlichungstag der Anmeldung :
16.12.81 Patentblatt 81/50

(45) Bekanntmachung des Hinweises auf die Patenterteilung : 07.08.85 Patentblatt 85/32

(84) Benannte Vertragsstaaten :
DE FR GB SE

(56) Entgegenhaltungen :
CH-A- 547 861
DE-A- 1 533 875
DE-C- 658 391
FR-A- 2 401 227
GB-A- 833 016
US-A- 3 690 930

(73) Patentinhaber : VOEST-ALPINE Aktiengesellschaft
Friedrichstrasse 4
A-1011 Wien (AT)

(72) Erfinder : Sulzbacher, Horst, Dipl.Ing.
Dirnböckweg 5
A-8700 Leoben (AT)
Erfinder : Stift, Kurt, Dipl.Ing.
Parkstrasse 16
A-8700 Leoben (AT)
Erfinder : Salger, Günther
Gartenstrasse 3
A-8793 Trofaiach (AT)

(74) Vertreter : Kretschmer, Adolf, Dipl.-Ing.
Schottengasse 3a
A-1014 Wien (AT)

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung bezieht sich auf ein Verfahren zum Behandeln von metallischen Hütteneinsatzstoffen, insbesondere Eisenschwammteilchen, zum Schutz gegen Reoxydation und/oder Korrosion, sowie zur Verbesserung des Einschmelzverhaltens dieser Teilchen, bei welchem auf die Eisenschwammteilchen ein Überzug aus CaO sowie Eisen oder Eisenoxyden als Haftvermittler aufgebracht wird, und hierauf Wasser auf den Überzug aufgesprüht wird. Aus der AT-PS 350 600 ist ein Verfahren zur Behandlung von Eisenschwamm zum Schutz gegen Reoxydation bekannt. Der bei diesem Verfahren zum Einsatz gelangende Eisenschwamm wird üblicherweise durch Direktreduktion von Eisenerzen mit Hilfe eines Reduktionsgases im Drehrohrofen oder auch in einem Schachtofen hergestellt. Das Reduktionsgas besteht zumeist aus Wasserstoff und Kohlenmonoxyd und reduziert das Eisenoxyd zu metallischem Eisen. Das bekannte Verfahren zur Erhöhung der Oxydations-beständigkeit bei Transport und Lagerung solcher Teilchen besteht im wesentlichen darin, daß die Teilchen im Anschluß an die Eisenschwammherstellung in einem Gemisch von gebranntem Kalkstaub und Zusätzen, die die Haftfähigkeit verbessern, wie Eisen und Eisenoxyden, insbesondere $Fe_2O_3$ und $Fe_3O_4$, gerollt werden. Anschließend werden die Eisenschwammteilchen mit Wasser befeuchtet und in gebranntem kalk gewälzt. Durch anschließendes teilweises Löschen des gebrannten Kalkes in Verbindung mit dem Eisenstaub wird ein Quellen der Oberflächenabdeckung der Eisenschwammteilchen erzielt, wobei gleichzeitig durch die Hydratisierungswärme und durch den noch vorhandenen Sauerstoff die Bildung einer schützenden Magnetitschicht auf der Oberfläche des Eisenschwammes ermöglicht wird. Die nach diesem Verfahren passivierten Eisenschwammteilchen weisen eine ausgezeichnete Beständigkeit gegen Reoxydation auf. Aus der DE-A 1 533 875 ist bereits ein Verfahren bekanntgeworden, bei welchem auf die Ausbildung einer abdichtenden äußeren Schale aus Kunststoff abgezielt wird.

Die Erfindung zielt nun darauf ab, das eingangs genannte Verfahren dahingehend weiterzubilden, daß neben einem Schutz gegen Reoxydation auch eine zusätzliche Verbesserung des Einschmelzverhaltens der Teilchen auftritt. Zur Lösung dieser Aufgabe besteht die Erfindung im wesentlichen darin, daß auf den im wesentlichen aus hydratisiertem CaO bestehenden Überzug in einem weiteren Verfahrensschritt ein zweiter Überzug aus einem Gemisch von staubförmigem CaO mit einem Kohlenstoffträger und gegebenenfalls Eisenoxyden sowie gegebenenfalls Legierungselementen aufgebracht wird, und daß der zweite Überzug mit einer geringeren Wassermenge als für die vollständige Hydratisation des im zweiten Überzug enthaltenen CaO erforderlich wäre, befeuchtet wird. Dadurch, daß auf die erste Überzugsschicht ein zweiter Überzug aus einem Gemisch von staubförmigem CaO mit einem Kohlenstoffträger aufgebracht wird, wird ein Produkt erhalten, über welches nicht nur zusätzliche Energieträger in den Schmelzprozeß eingetragen werden, sondern vor allen Dingen auch große Vorteile in Bezug auf die Aufkohlung des Bades erzielt werden können. Beim gleichzeitigen Einschmelzen von Eisenschwamm und Schrott verringert der Eisenschwamm das hohe Lückenvolumen des Schrottes und erhöht somit dessen Schüttgewicht und die Einschmelzleistung. Die beschichteten Eisenschwammteilchen können hiebei nicht reoxydieren, da sie auf Grund des Kohlenstoffgehaltes von einer reduzierenden Hülle umgeben sind. Beim Einschmelzen entsteht zunächst Kohlenmonoxyd, welches im Ofenraum mit Sauerstoff zu $CO_2$ verbrennt, wodurch es zu einer rascheren Erwärmung des Schrottes und auch des Ofengefäßes und damit zu einer Verbesserung der Einschmelzleistung kommt. Die teilweise Hydratisation des im zweiten Überzug enthaltenen CaO ergibt hiebei in bezug auf die Haftfähigkeit und die Stabilität die aus der AT-PS 350 600 bereits bekannten Vorteile. Eine derartige teilweise hydratisierte Außenschicht verhindert das Abplatzen und Beschädigen bei weiterer Behandlung.

Als Kohlenstoffträger kommen hiebei in erster Linie Kohlenstaub, wie Braunkohlen, Steinkohlen- oder Anthrazitkohlenstaub in Betracht. Alternativ können in diese zweite Beschichtung Kohlenwasserstoffe eingebracht werden.

Beim herkömmlichen Aufkohlen einer Schmelze wird der Kohlenstoff auf das blanke Bad aufgebracht bzw. schon mit dem Schrott zusammen chargiert. Bei derartigen Verfahren kann es zu einem Abbrand des Kohlenstoffes kommen, der bis zu 50 % betragen kann. Die gleichfalls bekannte Zugabe von festem Kohlenstoff auf die Schlackenoberfläche bewirkt, daß die Schlacke abgesteift wird und daß durch das geringe spezifische Gewicht des Kohlenstoffes kaum ein Kontakt mit dem Metallbad und somit kaum eine Aufkohlung zustandekommt. Wird der Kohlenstoff jedoch als integrierender Bestandteil der Eisenschwammpartikel eingebracht, so sinkt er zusammen mit diesen Teilchen bei geeigneten Schlacken- und Frischbedingungen durch die Schlackenschicht hindurch und tritt in das Metallbad ein. Der in der Beschichtung enthaltene Kohlenstoffanteil gelangt somit in hohem Maße in das Bad und es läßt sich durch die Zugabe von Kohlenstoff enthaltenden Eisenschwammteilchen der gewünschte Einschmelz- bzw. Endkohlenstoffgehalt erzielen. Dadurch, daß Teilchen mit einem Kohlenstoffträger in der äußersten Schicht eingesetzt werden, läßt sich auch eine Verringerung des FeO-Gehaltes in der Schlacke erzielen, da der durch die Schlacke in Richtung des Bades absinkende Eisenschwamm auf Grund seines Kohlenstoffgehaltes das Eisenoxyd in der Schlacke reduziert. Auf diese Weise kann das Ausbringen erhöht werden. Da der Kohlenstoffgehalt einen zusätzlichen Energieträger darstellt, läßt sich insbesondere bei einem Sauerstoffaufblasprozeß der feste Einsatz, insbesondere der Einsatz an Eisenschwammteilchen, mit der erfindungsgemäßen Beschichtung und Schrott erhöhen. Da durch den ersten Überzug

2

bereits ein guter Schutz gegen Reoxydation erzielt werden kann, ist es ohne weiteres möglich, den zweiten Überzug mit erwünschten Legierungsbestandteilen zu versetzen, wobei vor allem die Verwendung feinkörniger Legierungsmetalle oder von Oxyden und Karbiden dieser Legierungsmetalle in Frage kommt. Die nachfolgende teilweise Hydratisierung des Überzuges führt zu einem beständigen Einbetten dieser Legierungsbestandteile und erlaubt es mit hoher Genauigkeit den gewünschten Gehalt an Legierungsbestandteilen anzusteuern. Vorzugsweise wird hiefür der Überzug nach Aufbringen des zweiten Überzuges mit Wasser in einer geringeren Menge befeuchtet, als für die vollständige Hydratisation des im zweiten Überzug enthaltenen CaO erforderlich wäre.

Gemäß einer bevorzugten Weiterbildung des erfindungsgemäßen Verfahrens wird das CaO der ersten Beschichtung weitgehend vollständig, vorzugsweise zu 80 bis 100 % hydratisiert, wodurch die Haftung und Bindung der zweiten Schicht verbessert wird. Diese erste Beschichtung dient sowohl als Reoxidationsschutz als auch als Grundschicht zur Verbesserung des Agglomerationsverhaltens bei Bildung der zweiten Beschichtung. Dadurch, daß der Kohlenstoffträger erst mit der zweiten Beschichtung aufgebracht wird, wird der direkte Kontakt des Kohlenstoffträgers mit dem metallisierten Produkt und damit jeder negative Einfluß auf die Reoxidationsbeständigkeit vermieden.

Bei Eisenschwammschmelzen im Lichtbogen wird in den meisten Fällen auf eine Feinungsperiode verzichtet, da die Schwefelgehalte des Stahles sehr niedrig sind. Es ist daher günstig, eine Vorlegierung des Stahles während des Kochprozesses durchzuführen, worauf die Fertiglegierung in der Pfanne erfolgt. Als Rohstoffe für die Vorlegierung sind feinkörnige Legierungsmetalle vorgesehen, welche als Nebenprodukte anfallen oder Oxyde der Legierungselemente, welche durch den beigemischten Kohlenstoffträger im Elektrolichtbogen direkt reduziert werden. Durch die homogene Verteilung des Legierungsmaterials über den Eisenschwammeinsatz wird eine gleichmäßige Stahlzusammensetzung gefördert.

Vorzugsweise wird das erfindungsgemäße Verfahren so durchgeführt, daß der Kohlenstoffträger in einer Menge in den zweiten Überzug eingebracht wird, welche einen Kohlenstoffgehalt von 1 bis 20 Gew.%, insbesondere 3 bis 5 Gew.%, bezogen auf das Gewicht der Eisenschwammteilchen ergibt. Bei derartigen Gehalten an Kohlenstoffträgern wurden die günstigsten Ergebnisse beim Einschmelzen erzielt. Neben Braunkohlen-, Steinkohlenoder Anthrazitkohlenstaub lassen sich vor allen Dingen Erdöl bzw. Erdölprodukte, insbesondere Kohlenwasserstoffe, als Kohlenstoffträger verwenden. Besonders bevorzugt im Rahmen des erfindungsgemäßen Verfahrens ist hiebei Kohlenstoffstaub, da mit Kohlenstoffstaub die geringsten Umweltbelastungsprobleme verbunden sind und die geringste Gefahr eines Einbringens von unerwünschten Elementen besteht. In der Regel ist ein maximaler Gehalt von 10 Gew.% Kohlenstoff ausreichend. Höhere Kohlenstoffgehalte verbessern das Aufschmelzerhalten nicht mehr.

Vorzugsweise wird auch dem Gemisch für den zweiten Überzug Eisenoxydstaub, insbesondere $Fe_2O_3$ und $Fe_3O_4$ in Mengen von 1 bis 20 Gew.%, vorzugsweise bis 10 Gew.% des Gemisches, zugesetzt, wodurch die Haftfähigkeit des zweiten Überzuges am ersten Überzug verbessert wird. Hiebei können in einfacher Weise die den ersten Überzug tragenden Teilchen in ein angefeuchtetes Gemisch aus CaO, Eisenoxyden und/oder Legierungsbestandteilen, sowie dem Kohlenstoffträger eingebracht werden. Um die Gefahr einer Reoxydation auch bei Lagerung über längere Zeiträume gering zu halten, wird vorzugsweise das feuchte Gemisch für den zweiten Überzug maximal zu etwa 85 %, vorzugsweise zwischen 50 und 75 %, hydratisiert. In allen Fällen werden bevorzugt nur Eisenschwammteilchen mit einer Korngröße von wenigstens 2 mm eingesetzt, wobei insbesondere eine Korngröße von wenigstens 4 mm gewählt wird.

In vorteilhafter Weise wird die Summe der Mengen der beiden Überzüge mit etwa 5 bis 25 Gew.%, vorzugsweise 6 bis 20 Gew.%, bezogen auf das Gewicht der Eisenschwammteilchen gewählt, wobei der zweite Überzug in einer Menge von 2 bis 20 Gew.%, vorzugsweise 5 bis 15 Gew.%, bezogen auf das Gewicht der Eisenschwammteilchen aufgetragen wird. In jedem Fall erscheint es vorteilhaft, den zweiten Überzug in einer das Gewicht des ersten Überzuges übersteigenden Menge aufzutragen. Auf diese Weise lassen sich die gewünschten Kohlenstoffgehalte bezogen auf das Gewicht der Eisenschwammteilchen mit Sicherheit erzielen. In vorteilhafter Weise enthält das Beschichtungsmaterial für den zweiten Überzug 20 bis 40 Gew.% CaO, vorzugsweise 30 Gew.%, und 60 bis 80 Gew%, vorzugsweise 70 Gew.%, festen Kohlenstoffträger.

Die Erfindung wird nachfolgend an Hand von Ausführungsbeispielen näher erläutert.

Anwendungsbeispiel 1 : In einem 1 t Lichtbogenofen (600 KVA) wurde ein unbeschichtetes DRE (= Direktreduktionseisen) und zum Vergleich ein mit Koks- und Kohlenstaub behandeltes Material gleicher Ausgangsqualität erschmolzen. In beiden Fällen lag der Metallisationsgrad bei ca. 84 %.

(Siehe Tabelle Seite 4 f.)

**0 041 940**

Analyse unbeschichtetes          Analyse beschichtetes

|            | DRE |   | DRE |   |
|------------|------|---|------|---|
| Fe met     | 74.4 | % | 69.1 | % |
| Fe ges     | 88.9 | % | 82.8 | % |
| Metgrad    | 83.7 | % | 83.5 | % |
| C          | 1.6  | % | 4.8  | % |
| CaO        | 0.1  | % | 3.1  | % |
| $SiO_2$    | 1.7  | % | 1.6  | % |
| $Al_2O_3$  | 0.7  | % | 0.6  | % |
| MgC        | 0.4  | % | 0.3  | % |
| $H_2O$     | 2.3  | % | 1.6  | % |
| $CaO/SiO_2$| 0.06 | % | 1.9  | % |

Es wurde ein Schrott-Eisenschwammverhältnis von ca. 1 : 2 gewählt (375 kg Schrott, 975 kg Eisenschwamm). Nach Einschmelzen des Schrottes wurde der Eisenschwamm kontinuierlich chargiert, mit einer Zugabegeschwindigkeit, welche das vollkommene Aufschmelzen des zugegebenen Eisenschwammes zuließ. Die Resultate der Versuchsschmelzen sind in der folgenden Tabelle verglichen :

|  | Schmelzergebnisse | | |
|---|---|---|---|
|  | Unbeschichtetes DRE | Beschichtetes DRE | Einsparung in % |
| Energieverbrauch für Schrott-schmelzen | 72 KWh/100 kg | 75 KWh/100 kg | − 3 |
| Energieverbrauch f. Einschmelzen von DRE | 125 KWh/100 kg | 97 KWh/100 kg | + 22 |
| Aufkohlungsmittel | 7.8 kg | -- | + 100 |
| C-Gehalt im Bad nach DRE Einschmelzen | 0.07 % | 0.18 % |  |
| FeO-Gehalt in der Schlacke | 41.2 % | 12.2 % |  |
| Schlackenmenge | 141 kg | 97 kg | + 31 |
| Eisenverluste in der Schlacke | 58.1 kg | 11.8 kg | + 80 |
| Gesamteinschmelz-zeit | 2.74[h] | 2.28[h] | +17 |

Anwendungsbeispiel 2 : Der beim Brechen von hochkohlenstoffhältigen Ferrochrom anfallende metallische Feinanteil wurde unter eine Korngröße von 200 μm aufgemahlen und mit Branntkalk und Koksstaub in einem Verhältnis von 50 % Ferrochrom, 20 % Koksstaub und 30 % CaO gemischt.

4

Dieses Gemisch wurde zur Beschichtung von Eisenschwamm herangezogen. Nach der Beschichtung und einer gewissen Auslagerungszeit ergab sich folgende Eisenschwammanalyse (in %) :

| | |
|---|---|
| Fe gesamt | 87,2 |
| Fe metallisch | 81,6 |
| Met grad | 93,6 |
| C | 2,5 |
| Cr | 2,2 |
| CaO | 2,3 |
| MgO | 0,6 |
| $SiO_2$ | 1,8 |
| $Al_2O_3$ | 0,5 |
| $H_2O$ | 0,9 |

Mit diesem Material wurden in einem Induktionsofen Laborschmelzversuche durchgeführt, welche ein hohes Chromausbringen in Metall erbrachten.

In typischer Weise wurden bei Verwendung eines Gemisches von 30 % Kalk und 70 % Festkohlenstoffträger für die zweite Beschichtung von Eisenschwamm Werte, für den Endkohlenstoff des rollierten Materials von 4,4 Gew.% und ein CaO-Gehalt von 2,8 Gew.% erhalten.

Prinzipiell bestehen für die Beschichtungsmenge nach oben hin lediglich dahingehend Grenzen, daß die Festigkeit der haftenden Schicht mit steigender Schichtdicke immer schlechter wird. Bei einem auf maximale Schichtstärke gerichteten Versuch konnten mit einem Beschichtungsmaterial für die zweite Beschichtung bestehend aus 80 % Koksstaub und 20 % CaO nach dem Rollieren folgende Werte für die Zusammensetzung gefunden werden :

| | |
|---|---|
| CaO | 6,28 % |
| C | 18,5 %. |

## Patentansprüche

1. Verfahren zum Behandeln von metallischen Hütteneinsatzstoffen, insbesondere Eisenschwammteilchen, zsm Schutz gegen Reoxidation und/oder Korrosion, sowie zur Verbesserung des Einschmelzverhaltens dieser Teilchen, bei welchem auf die Eisenschwammteilchen ein Überzug aus CaO sowie Eisen oder Eisenoxyden als haftvermittler aufgebracht wird, und hierauf Wasser auf den Überzug aufgesprüht wird, dadurch gekennzeichnet, daß auf den im wesentlichen aus hydratisiertem CaO bestehenden Überzug in einem weiteren Verfahrensschritt ein zweiter Überzug aus einem Gemisch von staubförmigem CaO mit einem Kohlenstoffträger und gegebenenfalls Eisenoxyden sowie gegebenenfalls Legierungselementen aufgebracht wird, und daß der zweite Überzug mit einer geringeren Wassermenge als für die vollständige Hydratisation des im zweiten Überzug enthaltenen CaO erforderlich wäre, befeuchtet wird.

2. Verfahren nach Anspruch 1, dadurch gekennzeichnet, daß als Kohlenstoffträger Kohlenstaub, wie Braunkohlen-, Steinkohlen- oder Anthrazitkohlenstaub, eingesetzt wird.

3. Verfahren nach Anspruch 1, dadurch gekennzeichnet, daß als Kohlenstoffträger Kohlenwasserstoffe eingesetzt werden.

4. Verfahren nach Anspruch 1, 2 oder 3, dadurch gekennzeichnet, daß der erste Überzug mit Wasser in einer Menge versetzt wird, welche eine 80 bis 100 %ige Hydratisierung des CaO der ersten Beschichtung ergibt.

5. Verfahren nach einem der Ansprüche 1 bis 4, dadurch gekennzeichnet, daß der Kohlenstoffträger in einer Menge in den zweiten Überzug eingebracht wird, welche einen Kohlenstoffgehalt von 1 bis 10 Gew.%, insbesondere 3 bis 5 Gew.%, bezogen auf das Gewicht der Eisenschwammteilchen ergibt.

6. Verfahren nach einem der Ansprüche 1 bis 5, dadurch gekennzeichnet, daß dem Gemisch für den zweiten Überzug Legierungsbestandteile in Form von feinkörnigen Metallen oder staubförmigen Oxyden und Carbiden, insbesondere des Mn, Si, Mo, V und Cr, zugesetzt werden.

7. Verfahren nach einem der Ansprüche 1 bis 6, dadurch gekennzeichnet, daß in das Gemisch für den zweiten Überzug Eisenoxydstaub, insbesondere $Fe_2O_3$ und $Fe_3O_4$ in Mengen von 1 bis 20 Gew.%, vorzugsweise bis 10 Gew.% des Gemisches, eingebracht wird.

8. Verfahren nach einem der Ansprüche 1 bis 7, dadurch gekennzeichnet, daß die den ersten Überzug tragenden Teilchen in ein angefeuchtetes Gemisch aus CaO, Eisenoxyden und/oder Legierungsbestandteilen, sowie dem Kohlenstoffträger eingebracht werden.

9. Verfahren nach Anspruch 8, dadurch gekennzeichnet, daß das feuchte Gemisch für den zweiten Überzug maximal zu etwa 85 %, vorzugsweise zwischen 50 und 75 %, hydratisiert wird.

10. Verfahren nach einem der Ansprüche 1 bis 9, dadurch gekennzeichnet, daß Eisenschwammteilchen mit einer Korngröße von wenigstens 2 mm eingesetzt werden.

11. Verfahren nach einem der Ansprüche 1 bis 10, dadurch gekennzeichnet, daß der zweite Überzug in einer das Gewicht des ersten Überzuges übersteigenden Menge aufgetragen wird.

5

12. Verfahren nach einem der Ansprüche 1 bis 11, dadurch gekennzeichnet, daß die Summe der Mengen der beiden Überzüge mit etwa 5 bis 25 Gew.%, vorzugsweise 6 bis 20 Gew.%, bezogen auf das Gewicht der Eisenschwammteilchen gewählt wird.

13. Verfahren nach einem der Ansprüche 1 bis 12, dadurch gekennzeichnet, daß der zweite Überzug in einer Menge von 2 bis 20 Gew.%, vorzugsweise 5 bis 15 Gew.%, bezogen auf das Gewicht der Eisenschwammteilchen, aufgetragen wird.

14. Verfahren nach einem der Ansprüche 1 bis 13, dadurch gekennzeichnet, daß das Beschichtungsmaterial für den zweiten Überzug 20 bis 40 Gew.-% CaO, vorzugsweise 30 Gew.%, und 60 bis 80 Gew.%, vorzugsweise 70 Gew.%, festen Kohlenstoffträger enthält.

## Claims

1. Method of treating metallic additives used in metallurgy, especially sponge iron particles, for the purpose of protecting the particles against reoxidation and/or against corrosion as well as for the purpose of improving the melting characteristics of said particles, said method comprising applying on the sponge iron particles a coating of CaO as well as iron or iron oxides as an adhesion promoter and then spraying water onto said coating, characterised in that a second coating consisting of a mixture of CaO powder and a carbon source and optionally iron oxides as well as optionally alloying elements is applied in a further method step onto the coating essentially consisting of hydrated CaO and that the second coating is humidified with a smaller amount of water than would be required for completely hydrating the CaO contained in the second coating.

2. Method as claimed in claim 1, characterised in that coal dust such as brown coal dust, bituminous coal dust or anthracite dust is used as carbon source.

3. Method as claimed in claim 1, characterised in that hydrocarbons are used as carbon source.

4. Method as claimed in claim 1, 2 or 3, characterised in that water is added to the fist coating in an amount which results in a hydration of the CaO contained in the first coating to an extent of 80 to 100 percent.

5. Method as claimed in any one of claims 1 to 4, characterised in that the carbon carrier is introduced into the second coating in an amount which results, based on the weight of the sponge iron particles, in a carbon content of 1 to 10 percent by weight, especially 3 to 5 percent by weight.

6. Method as claimed in any one of claims 1 to 5, characterised in that alloying components are added to the mixture for the second coating in the form of finegrained metals or powdered oxides and carbides, especially of Mn, Si, Mo, V and Cr.

7. Method as claimed in any one of claims 1 to 6, characterised in that iron oxide powder, especially $Fe_2O_3$ and $Fe_3O_4$ in amounts of 1 to 20 percent and preferably in an amount up to 10 percent of the mixture, is introduced into the mixture for the second coating.

8. Method as claimed in any one of claims 1 to 7, characterised in that the particles carrying the first coating are introduced into a humidified mixture of CaO, iron oxides and/or alloying components and of the carbon carrier.

9. Method as claimed in claim 8, characterised in that the wet mixture for the seond coating is hydrated to a maximum extent of approximately 85 percent, preferably to an extent between 50 and 75 percent.

10. Method as claimed in any one of claims 1 to 9, characterised in that sponge iron particles are used which have a particle size of at least 2 mm.

11. Method as claimed in any one of claims 1 to 10, characterised in that the second coating is applied in an amount exceeding the weight of the first coating.

12. Method as claimed in any one of claims 1 to 11, characterised in that the sum of the amounts of said both coatings is, based on the weight of the sponge iron particles, selected to be approximately 5 to 25 percent by weight, preferably 6 to 20 percent by weight.

13. Method as claimed in any one of claims 1 to 12, characterised in that the second coating is, based on the weight of the sponge iron particles, applied in an amount of 2 to 20 percent by weight, preferably 5 to 15 percent by weight.

14. Method as claimed in any one of claims 1 to 13, characterised in that the coating material for the second coating contains 20 to 40 percent by weight and preferably 30 percent by weight CaO and 60 to 80 percent by weight and preferably 70 percent by weight solid carbon carrier.

## Revendications

1. Procédé de traitement d'additifs métalliques utilisés en métallurgie, en particulier des particules de fer en éponge, afin de les protéger contre la réoxydation et/ou contre la corrosion, et d'améliorer la fusion de ces particules, ce procédé consistant à enduire ces particules de fer en éponge d'une couche de fixation, à base de CaO et de fer ou d'oxydes de fer, puis à arroser cette couche avec de l'eau, caractérisé en ce qu'on complète la couche précitée, essentiellement constituée de CaO hydratée, en appliquant sur cette première couche une seconde couche, constituée par un mélange de CaO pulvérulent associée à une substance carbonée, et éventuellement à des oxydes de fer ainsi qu'éventuellement à des éléments alliés ; et en ce qu'on humecte cette seconde couche, d'une quantité d'eau inférieure à la quantité qui serait nécessaire pour réaliser l'hydratation complète du CaO contenu dans cette seconde couche.

2. Procédé selon la revendication 1, caractérisé en ce qu'on utilise une substance carbonée constituée par de la poussière de charbon, de lignite, de houille ou d'anthracite.

3. Procédé selon la revendication 1, caractérisé en ce qu'on utilise une substance carbonée constituée par des hydrocarbures.

4. Procédé selon l'une des revendications 1 à 3, caractérisé en ce qu'on humecte la première couche, d'une quantité d'eau qui assure l'hydratation du CaO de cette première couche, à un taux d'hydratation compris entre 80 et 100 %.

5. Procédé selon l'une des revendications 1 à 4, caractérisé en ce qu'on incorpore dans la deuxième couche de protection des substances carbonées, dans une proportion qui correspond à un taux pondéral de carbone de 1 à 10 %, et de préférence à un taux pondéral de carbone de 3 à 5 %, par rapport au poids des particules de fer en éponge.

6. Procédé selon l'une des revendications 1 à 5, caractérisé en ce qu'on incorpore dans le mélange constitutif de la deuxième couche de protection des additifs destinés à produire des alliages, et se présentant sous la forme de métaux en grains fins, ou de poussière d'oxydes et de carbures, en particulier de Mn, Si, Mo, V et Cr.

7. Procédé selon l'une des revendications 1 à 6, caractérisé en ce qu'on incorpore de la poudre d'oxyde de fer dans le mélange constitutif de la deuxième couche de protection, et en particulier des oxydes $Fe_2O_3$ et $Fe_3O_4$, dans une proportion pondérale de 1 à 20 %, de préférence 10 % du mélange.

8. Procédé selon l'une des revendications 1 à 7, caractérisé en ce qu'on traite les particules déjà enduites de la première couche de protection, en les faisant passer dans un mélange humidifié, à base de CaO, d'oxydes de fer et/ou d'éléments alliés, ainsi que de la substance riche carbonée.

9. Procédé selon la revendication 8, caractérisé en ce qu'on humidifie le mélange constitutif de la seconde couche protectrice, dans une proportion correspondant au maximum à un taux d'hydratation de 85 % environ, de préférence entre 50 et 75 %.

10. Procédé selon l'une des revendications 1 à 9, caractérisé en ce qu'on utilise des particules de fer en éponge ayant un calibre de 2 mm au moins.

11. Procédé selon l'une des revendications 1 à 10, caractérisé en ce qu'on applique la seconde couche de protection sur chaque particule de fer en éponge, en y déposant un poids de matière supérieure à celui de la première couche de protection.

12. Procédé selon l'une des revendications 1 à 11, caractérisé en ce que la somme des masses des deux couches de protection, rapportée au poids de la particule considérée, est comprise entre 5 et 25 %, et comprise de préférence entre 6 et 20 %.

13. Procédé selon l'une des revendications 1 à 12, caractérisé en ce qu'on applique la deuxième couche de protection dans une proportion pondérale comprise entre 2 et 20 % de préférence entre 5 et 15 % du poids des particules de fer en éponge.

14. Procédé selon l'une des revendications 1 à 13, caractérisé en ce que le mélange constitutif de la deuxième couche de protection contient en poids une proportion de CaO comprise entre 20 et 40 %, de préférence 30 %, et une proportion de matière carbonée solide comprise entre 60 et 80 %, de préférence 70 %.